Europäisches Patentamt

European Patent Office

Office européen des brevets

(19)

(11) Veröffentlichungsnummer : **0 494 905 B1**

(12) **EUROPÄISCHE PATENTSCHRIFT**

(45) Veröffentlichungstag der Patentschrift :
23.11.94 Patentblatt 94/47

(51) Int. Cl.⁵ : **G11B 7/085**

(21) Anmeldenummer : **90914526.0**

(22) Anmeldetag : **20.09.90**

(86) Internationale Anmeldenummer :
**PCT/EP90/01599**

(87) Internationale Veröffentlichungsnummer :
**WO 91/05339 18.04.91 Gazette 91/09**

(54) **ZÄHLVORRICHTUNG.**

(30) Priorität : **30.09.89 DE 3932833**

(43) Veröffentlichungstag der Anmeldung :
**22.07.92 Patentblatt 92/30**

(45) Bekanntmachung des Hinweises auf die
Patenterteilung :
**23.11.94 Patentblatt 94/47**

(84) Benannte Vertragsstaaten :
**AT BE CH DE DK ES FR GB IT LI LU NL SE**

(56) Entgegenhaltungen :
**PATENT ABSTRACTS OF JAPAN Vol. 9, No.
127 (P-360)(1850) 31 May 1985, & JP-A-60
010429 (TOSHIBA K.K.) 19 Januar 1985,**

(73) Patentinhaber : **Deutsche Thomson-Brandt
GmbH
Postfach 1307
D-78003 Villingen-Schwenningen (DE)**

(72) Erfinder : **GLEIM, Günter
Oberer Sonnenbühl 22
D-7730 Villingen-Schwenningen 22 (DE)**
Erfinder : **FÜLDNER, Friedrich
Wilstorfstrasse 19
D-7730 Villingen-Schwenningen (DE)**
Erfinder : **REKLA, Bernd
Konstanzer Strasse 24
D-7730 Villingen-Schwenningen (DE)**

## Beschreibung

Die Erfindung betrifft ein Verfahren zum Zählen von Markierungen, die von einem Abtaster abgetastet werden.

CD-Spieler, Videoplattenspieler, DRAW-Disc-Spieler oder magnetooptische Aufzeichnungs- und Wiedergabegeräte sind beispielsweise mit einer optischen Abtastvorrichtung ausgestattet.

Aufbau und Funktion einer optischen Abtastvorrichtung, eines sogenannten optical pick-ups, sind in Electronic Components & Applications, Vol. 6, No. 4, 1984 auf Seite 209 - 215 beschrieben.

Der von einer Laserdiode ausgesendete Lichtstrahl wird mittels Linsen auf die CD-Platte fokussiert und von dort auf einen Photodetektor reflektiert. Aus dem Ausgangssignal des Photodetektors werden die auf der CD-Platte gespeicherten Daten und der Istwert für den Fokus- und für den Spurregelkreis gewonnen. In der genannten Literaturstelle wird die Abweichung des Istwerts vom Sollwert für den Fokusregelkreis als focusing error bezeichnet, während für die Abweichung des Istwerts vom Sollwert des Spurregelkreises der Ausdruck radial tracking error gewählt ist.

Als Stellglied für den Fokusregelkreis dient eine Spule, über deren Magnetfeld eine Objektivlinse entlang der optischen Achse bewegbar ist. Der Fokusregelkreis bewirkt nun durch Verschieben der Objektivlinse, daß der von der Laserdiode ausgesendete Lichtstrahl stets auf die CD-Platte fokussiert wird. Mittels des Spurregelkreises, der oft auch als Radialantrieb bezeichnet wird, ist die optische Abtastvorrichtung bezüglich der CD-Platte in radialer Richtung verschiebbar. Dadurch kann der Lichtstrahl auf den spiralförmigen Datenspuren der CD-Platte geführt werden.

Bei einigen Geräten ist der Radialantrieb aus einem sogenannten Grob- und einem sogenannten Feinantrieb aufgebaut. Der Grobantrieb ist beispielsweise als Spindel ausgeführt, mittels der die gesamte optische Abtastvorrichtung aus der Laserdiode, den Linsen, dem Prismenstrahlteiler und dem Photodetektor radial verschiebbar ist. Mit dem Feinantrieb ist der Lichtstrahl zusätzlich in radialer Richtung verschiebbar oder z.B. um einen vorgebbaren kleinen Winkel kippbar. Mittels des Feinantriebs kann daher der Lichtstrahl ein kleines Stück - etwa 1 mm - entlang einem Radius der CD-Platte gefahren werden.

Um eine einwandfreie Wiedergabe der Daten, seien es nun z.B. Bild und Ton bei einem Videoplattenspieler oder bloß der Ton bei einem CD-Spieler oder die Daten einer magneto-optischen Platte, zu erzielen, ist neben einer genauen Fokussierung des Lichtstrahls auf die Platte eine präzise Führung entlang den Datenspuren der Platte erforderlich.

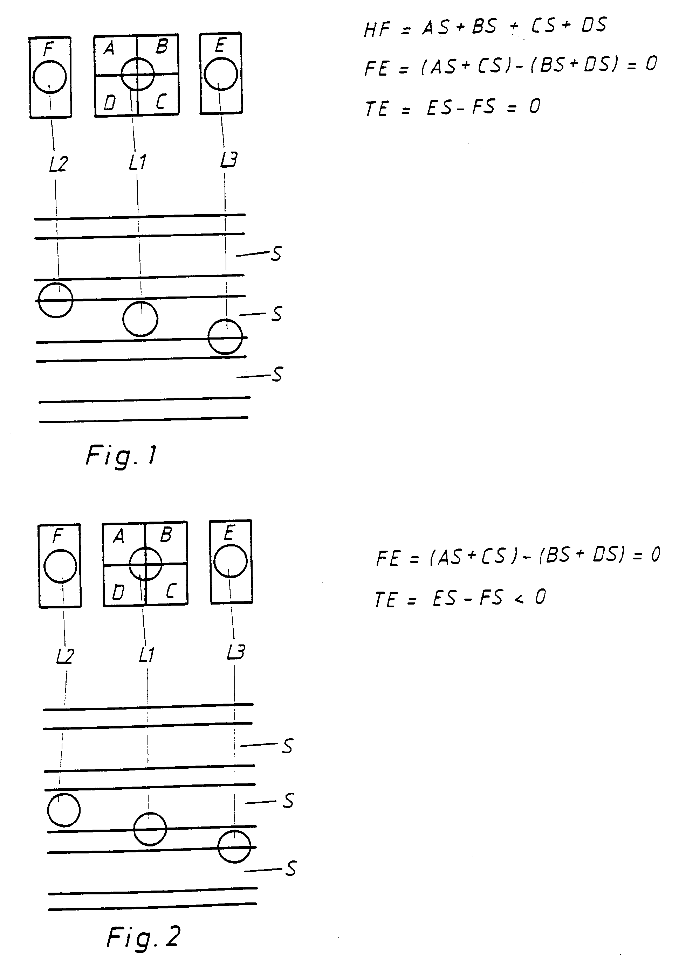

In der Figur 1 ist der Photodetektor PD der optischen Abtastvorrichtung eines CD-Spielers gezeigt, bei der drei Laserstrahlen L1, L2 und L3 auf die CD-Platte fokussiert werden. Die Laserstrahlen L2 und L3 sind die Beugungsstrahlen +1. und -1. Ordnung. Eine derartige Abtastvorrichtung wird in der eingangs genannten Literaturstelle als Three-Beam-Pick-Up bezeichnet, weil sie mit drei Lichtstrahlen arbeitet.

Beim Photodetektor sind vier quadratförmige Photodioden A, B, C und D so zusammengefügt, daß sie wiederum ein Quadrat bilden. Vor dem aus den vier Photodioden A, B, C und D gebildeten Quadrat liegt eine rechteckige Photodiode E; hinter dem Quadrat ist eine weitere Photodiode F vorgesehen. Der mittlere Laserstrahl L1, der auf die vier Photodioden A, B, C und D fokussiert wird, erzeugt das Datensignal HF = AS + BS + CS + DS und das Fokusfehlersignal FE = (AS + CS) - (BS + DS). Die beiden äußeren Lichtstrahlen L2 und L3, von denen der vordere L3 auf die Photodiode E, der hintere L2 auf die Photodiode F fällt, erzeugen das Spurfehlersignal TE = ES - FS. Mit AS, BS, CS, DS, ES und FS sind jeweils die Photospannungen der Dioden A, B, C, D, E und F bezeichnet.

In der Figur 1 folgt der mittlere Laserstrahl L1 genau der Mitte einer Spur S. Das Spurfehlersignal TE hat den Wert null.

$$TE = ES - FS = 0.$$

Wenn der mittlere Lichtstrahl von der Mitte einer Spur S abweicht, bewegt sich der eine Beugungsstrahl mehr zur Spurmitte hin, während der andere Beugungsstrahl auf den Zwischenraum zwischen zwei Spuren S strahlt. Weil aber die Reflexionseigenschaften einer Spur und eines Zwischenraumes unterschiedlich sind, wird der eine Beugungsstrahl stärker reflektiert als der andere.

In der Figur 2 ist der Fall dargestellt, daß die Laserstrahlen L1, L2 und L3 nach rechts von der Spur S verschoben sind. Das Spurfehlersignal nimmt einen negativen Wert an:

$$TE = ES - FS < 0.$$

Das Stellglied des Spurregelkreises bewegt die optische Abtastvorrichtung nun soweit nach links, bis das Spurfehlersignal TE null wird.

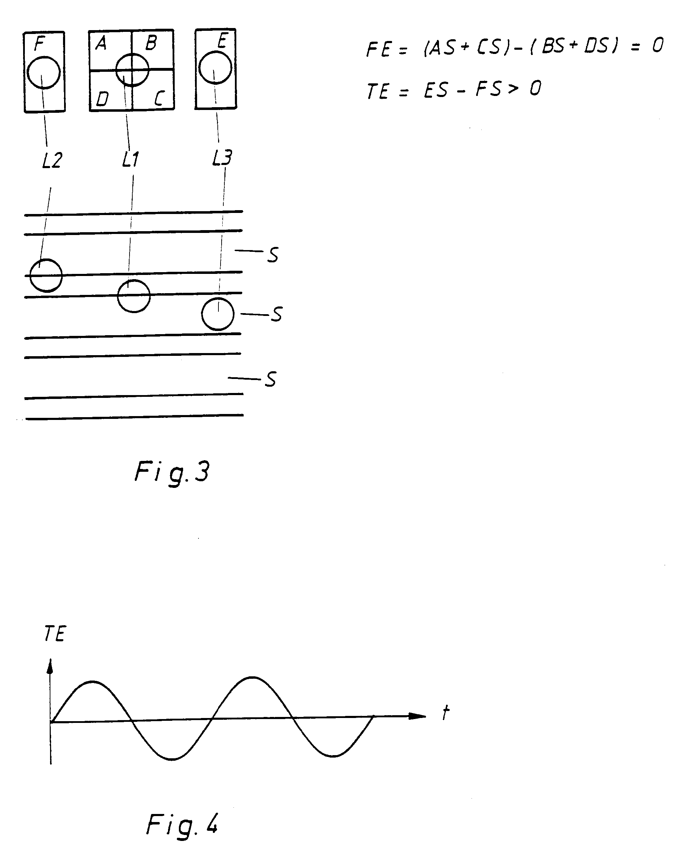

Im entgegengesetzten Fall, wenn die Laserstrahlen nach links von der Spur verschoben sind, ist das Spurfehlersignal positiv: $TE = ES - FS > 0$. Nun bewegt das Stellglied des Spurregelkreises die optische Abtastvorrichtung so weit nach rechts, bis das Spurfehlersignal TE null wird. Dieser Fall ist in Figur 3 gezeigt.

Wenn der Lichtstrahl L1 und die zugehörenden Beugungsstrahlen L2 und L3 mehrere Datenspuren kreuzen, nimmt das Spurfehlersignal TE den in Figur 4 gezeigten sinusförmigen Verlauf an.

Aus der JP-OS 60 10429 ist ein Spurregelkreis bekannt, bei dem an der unteren und oberen Hüllkurve des HF-Signals erkannt wird, ob der Lichtstrahl Datenspuren kreuzt. Wenn der Lichtstrahl über mehrere Datenspuren läuft, bricht das HF-Signal regelmäßig zwischen zwei Spuren zusammen.

Um die Anzahl der vom Lichtstrahl überstrichenen Spuren festzustellen, wird die Hüllkurve des HF-Signals gebildet und in ein rechteckförmiges Signal umgewandelt, das dem Zähleingang eines Vorwärts-Rückwärts-Zählers zugeführt wird. Auf diese Weise werden von dem Vorwärts-Rückwärts-Zähler die HF-Einbrüche gezählt.

Um festzustellen, in welcher Richtung der Lichtstrahl bewegt wurde, radial nach innen oder außen, ist eine sogenannte Richtungslogik erforderlich. Es ist z.B. bekannt, dem D-Eingang eines D-Flip-Flops das Spurfehlersignal TE und seinem Takteingang die Einhüllende des HF-Signals zuzuführen. Das D-Flip-Flop erhält deshalb stets einen Impuls an seinem Takteingang, wenn der Lichtstrahl eine Datenspur kreuzt. Weil das Vorzeichen des Spurfehlersignals TE jedoch von der Richtung abhängt, in welcher der Lichtstrahl eine Datenspur verläßt, wird bei der einen Richtung das D-Flip-Flop gesetzt - sein Ausgang geht auf "HIGH" - , bei der anderen Richtung bleibt dagegen sein Ausgang auf "LOW". Das Signal am Q-Ausgang des D-Flip-Flops kann daher zur Bestimmung der Zählrichtung - vorwärts oder rückwärts - eines Vorwärts-Rückwärts-Zählers dienen. Deshalb zählt der Vorwärts-Rückwärts-Zähler im Fall der einen Richtung vorwärts, während er im Fall der anderen Richtung rückwärts zählt.

Ein Nachteil dieses bekannten Spurregelkreises besteht aber darin, daß bei der Richtungsumkehr des Lichtstrahls auf die Phasenlage der die Zählimpulse und das Spurfehlersignal erzeugenden Signale zu achten ist, weil bei ungünstiger Phasenlage Fehler auftreten können.

Es ist daher Aufgabe der Erfindung, bei einem Verfahren zum Zählen von Markierungen oder Datenspuren die Fehlerrate zu verringern.

Die Erfindung löst diese Aufgabe dadurch, daß ein erster Zähler jeweils einen Zählimpuls erhält, wenn der Abtaster in der gewünschten Richtung von einer Markierung zur nächsten springt, daß ein zweiter Zähler jeweils einen Zählimpuls erhält, wenn der Abtaster in der unerwünschten Richtung von einer Markierung zur nächsten springt, daß zum Springen über m Markierungen der Zählerstand des ersten Zählers auf einen ersten vorgebbaren Wert gesetzt wird, während der Zählerstand des zweiten Zählers auf einen zweiten vorgebbaren Wert gesetzt wird, daß die Zählerstände der beiden Zähler miteinander verglichen werden und daß bei Gleichheit der Zählerstände ein Signal zum Anhalten des Abtasters abgegeben wird.

Es zeigen

Figur 5 ein erstes Ausführungsbeispiel

Figur 6 ein zweites Ausführungsbeispiel

Figur 7 ein drittes Ausführungsbeispiel der Erfindung.

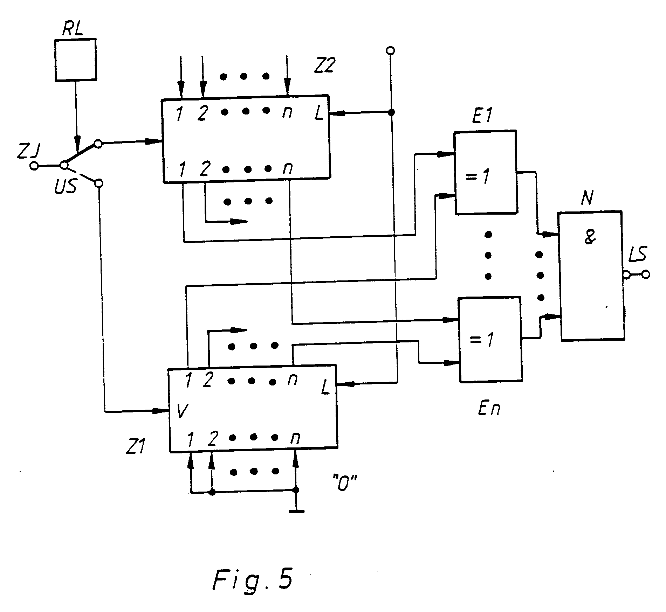

Anhand des in Figur 5 gezeigten Ausführungsbeispieles wird die Erfindung zunächst beschrieben und anschließend erläutert.

Mittels eines steuerbaren Umschalters US, der von einer Richturgslogik RL angesteuert wird, werden dem Zähleingang V eines n-Bit-Zählers Z1 die aus der Hüllkurve des HF-Signals gewonnenen Zählimpulse ZI zugeführt, wenn sich der Lichtstrahl beim Spurspringen in der gewünschten Richtung, z.B. radial nach innen zur Plattenmitte hin bewegt. Springt der Lichtstrahl dagegen z.B. infolge einer Erschütterung oder eines Stoßes in die entgegengesetzte Richtung radial nach außen zum Plattenrand hin, so werden die Zählimpulse ZI vom steuerbaren Umschalter US an den Zähleingang V eines n-Bit-Zählers Z2 gelegt. Die Ausgänge des n-Bit-Zählers Z1 und des n-Bit-Zählers Z2 sind derart mit einer Kette aus n ÄQUIVALENZ-Gattern E1 bis En verbunden, daß jeweils zwei gleichwertige Ausgänge der beiden Zähler Z1 und Z2 mit den beiden Eingängen eines ÄQUIVALENZ-Gatters verbunden sind. Die Ausgänge der ÄQUIVALENZ-Gatter E1 bis En sind mit den Eingängen eines NAND-Gatters N verbunden.

Wenn der Lichtstrahl z.B. um 200 Spuren radial nach innen springen soll, wird der Zähler Z2 auf 200 geladen, während der Zähler Z1 auf null zurückgesetzt wird. Hierzu gibt eine nicht eingezeichnete Steuereinrichtung, beispielsweise ein Mikroprozessor, einen Impuls an die miteinander verbundenen Ladeeingänge L der beiden Zähler Z1 und Z2. Weil der Zähleingang V des Zählers Z1 nun die aus der Hüllkurve des HF-Signals gewonnenen Zählimpulse ZI erhält, zählt er von null an vorwärts. Der Zählerstand des Zählers Z2 bleibt auf 200 stehen, denn er erhält keine Zählimpulse. In den n ÄQUIVALENZ-Gattern E1 bis En werden nun jeweils die Bits miteinander verglichen, die an gleichwertigen Ausgängen der beiden Zähler Z1 und Z2 anstehen. Erst wenn alle gleichwertigen Bits an den Ausgängen der beiden Zähler Z1 und Z2 miteinander übereinstimmen - das ist der Fall, wenn beide Zählerstände gleich groß sind - geben alle ÄQUIVALENZ-Gatter E1 bis En an ihren Ausgängen eine logische Null ab. Das NAND-Gatter N gibt jetzt an seinem Ausgang eine logische Eins ab, die bedeutet, daß der Lichtstrahl nun 200 Spuren übersprungen hat, und bewirkt, daß er an der gewünschten Spur angekommen angehalten wird.

Bei einigen optischen Abtastvorrichtungen wird der Zählerstand des zweiten Zählers Z2 zum Springen über m Spuren nicht auf m, sondern einen kleineren Wert gesetzt. Wenn der Lichtstrahl zum Abbremsen z.B. zehn Spuren benötigt, so wird der Zähler Z2 auf m - 10 geladen. Daher wird mit dem Abbremsen des Lichtstrahls bereits zehn Spuren vor der Zielspur begonnen, damit er bei der gewünschten Spur anhält. Der Wert, auf den der Zähler Z2 zu laden ist, hängt vom Typ der optischen Abtastvorrichtung und des Regelkreises ab. Er kann z.B. durch Versuche ermittelt werden.

Nun kann es aber während des Spurspringens über die 200 Spuren vorkommen, daß der Lichtstrahl z.B. infolge einer Erschütterung um einige Spuren in die falsche Richtung springt. Derart starken Erschütterungen und Stößen sind z.B. CD-Spieler ausgesetzt, die in Fahrzeuge eingebaut sind.

Es soll nun angenommen werden, daß der Lichtstrahl infolge eines Stoßes, der z.B. durch ein Schlagloch verursacht sein kann, nachdem er bereits um 50 Spuren in die richtige Richtung gesprungen ist, nun zehn Spuren in die falsche Richtung - radial nach außen - kreuzt. Weil die Richtungslogik RL die Richtungsumkehr des Lichtstrahls erkennt, schaltet sie den steuerbaren Umschalter US um, so daß jetzt der Zähler Z2 zehn Zählimpulse erhält. Sein Zählerstand wird daher auf 210 erhöht. Sobald die Wirkung des Stoßes nachläßt, was bei dem angenommenen Beispiel nach zehn Spuren der Fall sein soll, bewegt sich der Lichtstrahl wieder in die richtige Richtung radial nach innen. Die Richtungslogik RL bewirkt nun durch Umschalten des steuerbaren Umschalters US, daß die Zählimpulse ZI nun wieder dem Zähler Z1 zugeführt werden. Weil aber der Zählerstand des Zählers Z2 von 200 auf 210 erhöht wurde, wird das Signal zum Anhalten des Lichtstrahls erst gegeben, wenn der Zähler Z1 auf 210 gezählt hat. So ist sichergestellt, daß der Lichtstrahl erst an der gewünschten Spur und nicht bereits zehn Spuren früher angehalten wird, wie es der Fall wäre, wenn der Zählerstand des Zählers Z2 nicht um 10 von 200 auf 210 erhöht worden wäre.

Weil aber bei CD-Spielern zum Aufsuchen eines gewünschten Musikstücks Sprünge über 1000 und mehr Spuren erforderlich sein können, steigt der Aufwand für die Zähler und die ÄQUIVALENZ-Gatter schnell an. Zum Springen über 1000 Spuren sind zwei 10-Bit-Zähler und zehn ÄQUIVALENZ-Gatter vorzusehen. Es ist aber wünschenswert, den Aufwand an Zählern und Gattern möglichst gering zu halten.

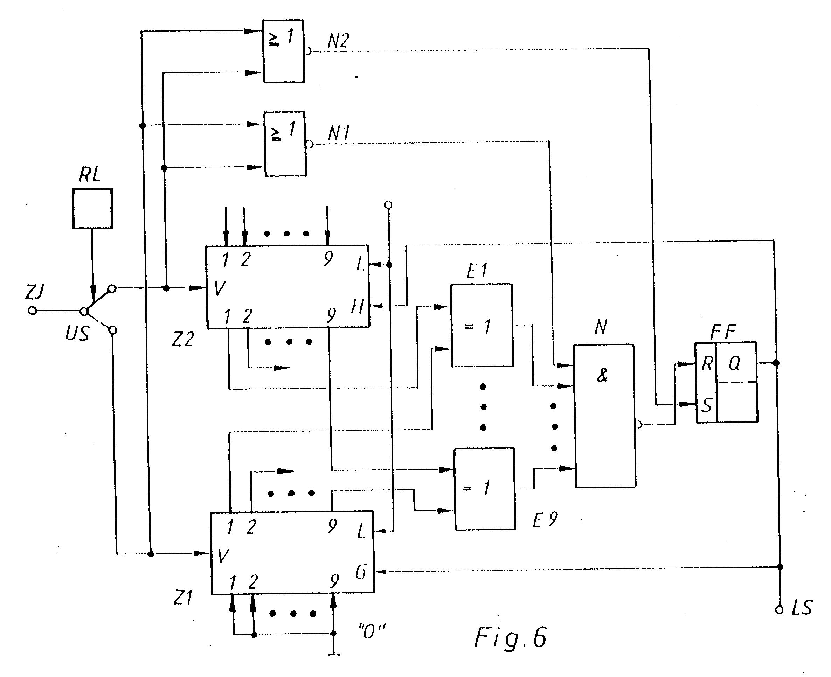

Das zweite in Figur 6 abgebildete Ausführungsbeispiel ist so gestaltet, daß mit zwei 9-Bit-Zählern über beliebig viele Spuren gesprungen werden kann. Es ist, wie im folgenden beschrieben wird, durch ein Verzögerungsglied und ein Flip-Flop ergänzt.

Der Ausgang des NAND-Gatters N ist mit dem Rücksetzeingang R eines RS-Flip-Flops FF verbunden, dessen Q-Ausgang, an dem das Signal LS zum Anhalten des Lichtstrahls abnehmbar ist, mit dem Rücksetzeingang G für das neunte Bit des Zählers Z1 und mit dem Setzeingang H für das neunte Bit des Zählers Z2 verbunden ist. Der Zähleingang V des Zählers Z1 ist mit dem ersten Eingang zweier NOR-Gatter N1 und N2 verbunden; der Zähleingang V des Zählers Z2 ist mit dem zweiten Eingang der NOR-Gatter N1 und N2 verbunden. Der Ausgang des NOR-Gatters N1 ist mit einem Eingang des NAND-Gatters N verbunden, während der Ausgang des NOR-Gatters N2 mit dem Setzeingang S des RS-Flip-Flops FF verbunden ist.

Es wird nun erläutert, wie ein Sprung des Lichtstrahls um beispielsweise 700 Spuren durchgeführt wird. Damit der Lichtstrahl von seiner gegenwärtigen Position z.B. dem Anfang des ersten Musikstücks auf einer CD-Platte zum dritten Musikstück springt, das der Bediener gerne hören möchte, berechnet ein Mikroprozessor im CD-Spieler in bekannter Weise, wieviele Spuren zwischen der gegenwärtigen Position des Lichtstrahls und dem Beginn des gewünschten Musikstücks liegen. In dem angenommenen Zahlenbeispiel möge die Anzahl der zwischen der augenblicklichen und der gewünschten Position des Lichtstrahls liegenden Spuren 700 betragen.

Um auf 700 zu zählen, muß ein 9-Bit-Zähler zweimal auf 256 und einmal auf 188 zählen, denn 2 ∗ 256 + 188 ergibt 700. Bei dem angenommenen Zahlenbeispiel wird der Zähler Z2 auf 188 geladen, der Zähler Z1 dagegen auf null gesetzt. Anschließend beginnt der Zähler Z1 zu zählen. Nach 188 Zählimpulsen sind die Zählerstände der beiden Zähler Z1 und Z2 zum ersten Mal gleich. Das RS-Flip-Flop FF wird daher zurückgesetzt. Der negative Impuls an seinem Q-Ausgang bewirkt nun, daß das 9. Bit im Zähler Z2 auf 1, im Zähler Z1 dagegen auf 0 gesetzt wird. Der Zähler Z1 zählt nun weiter, bis er nach 256 Zählimpulsen den gleichen Zählerstand wie der Zähler Z2 erreicht und das RS-Flip-Flop FF bei gleichem Zählerstand zum zweiten Mal einen negativen Impuls an seinem Q-Ausgang abgibt. Das 9. Bit wird daher im Zähler Z2 auf 1, im Zähler Z1 dagegen auf 0 gesetzt. Weil nach weiteren 256 Zählimpulsen die Zählerstände der beiden Zähler Z1 und Z2 wieder gleich sind, gibt das RS-Flip-Flop zum dritten Mal einen negativen Impuls an seinem Q-Ausgang ab. An diesem dritten negativen Impuls erkennt der Mikroprozessor, daß einmal 188 und zweimal 256 insgesamt also 700 Impulse gezählt worden sind.

Wenn während des Springens über die 700 Spuren der Lichtstrahl z.B. infolge von Stößen in die falsche Richtung springt, wird auf die gleiche Art und Weise wie beim ersten Ausführungsbeispiel der Zählerstand des Zählers Z2 um soviel erhöht, wie der Lichtstrahl insgesamt Spuren in der falschen Richtung übersprungen hat; denn es kann vorkommen, daß der Lichtstrahl auf holprigen Straßen während eines größeren Sprungs mehrmals wegen Erschütterungen in die falsche Richtung springt.

Um in solchen Fällen eine falsche Auswertung der Zählerstände zu vermeiden, wird bei gleichen Zählerständen das höchstwertige Bit im Zähler Z1 auf 0, im Zähler Z2 dagegen auf 1 gesetzt. Wenn nach 188 Zählimpulsen die Zählerstände zum ersten Mal gleich sind, zählt der Zähler Z1 weiter, solange der Lichtstrahl in der gewünschten Richtung Spuren überquert. Wenn aber nun z.B. nach 12 Spuren bei einem Zählerstand von 200 des Zählers Z1 der Lichtstrahl infolge einer Erschütterung um beispielsweise 20 Spuren in die unerwünschte Richtung versetzt wird, so zählt der Zähler Z2 von 188 auf 188 + 20 = 208. Bei 200 wären aber die Zählerstände gleich, wenn nicht zuvor bei dem Gleichstand von 188 das höchstwertige Bit des Zählers Z1 auf 0, das des Zählers Z2 dagegen auf 1 gesetzt worden wären. Ohne diese Maßnahme würde ein Impuls an den Mikroprozessor abgegeben werden. Weil der Lichtstrahl nach der Erschütterung die Spuren wieder in der gewünschten Richtung kreuzt, zählt der Zähler Z1 von 200 an aufwärts. Weil aber der Zählerstand des Zählers Z2 infolge der Erschütterung nicht mehr 188, sondern 208 beträgt, würden zum dritten Mal - jetzt bei einem Zählerstand von 208 des Zählers Z1 - gleiche Zählerstände festgestellt werden, obwohl der Lichtstrahl vom Ausgangspunkt an gerechnet erst 200 Spuren in der gewünschten Richtung gekreuzt hat, wenn nicht beim Zählergleichstand von 188 das höchstwertige Bit im Zähler Z1 auf 0, im Zähler Z2 dagegen auf 1 gesetzt worden wäre.

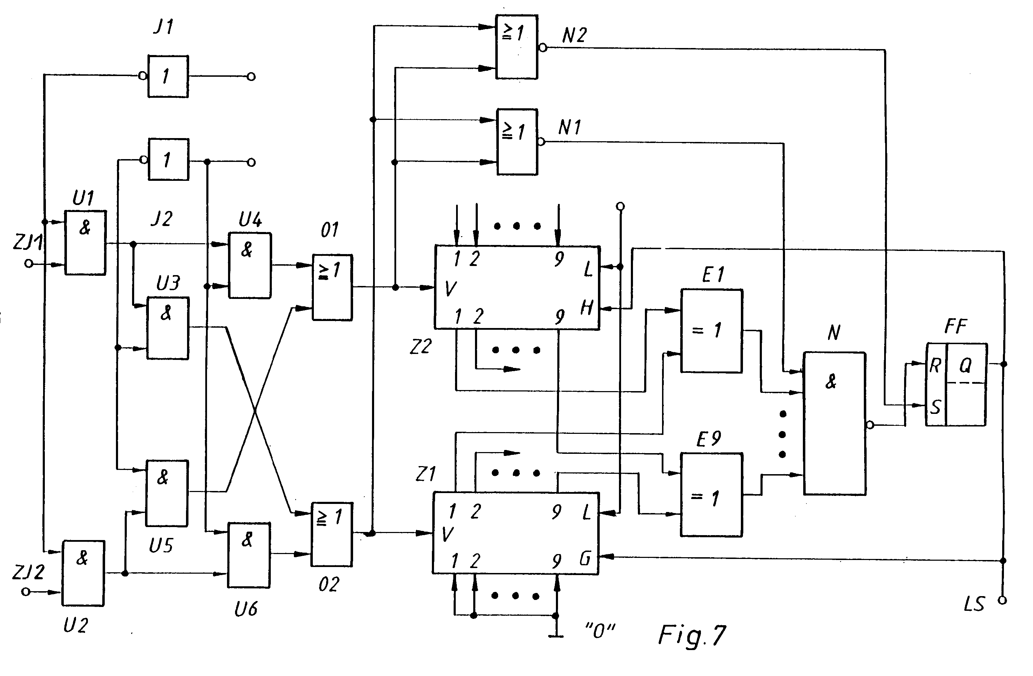

Der steuerbare Umschalter US kann, wie in Figur 7 dargestellt ist, so erweitert werden, daß die Zählimpulse ZI in Abhängigkeit von der gewünschten und der tatsächlichen Bewegungsrichtung des Lichtstrahls dem Zähler Z1 oder Z2 zugeführt werden.

Dieses in der Figur 7 gezeigte dritte Ausführungsbeispiel wird nun beschrieben und erläutert.

Wenn sich der Lichtstrahl radial nach innen bewegt, werden dem ersten Eingang eines UND-Gatters U1 Zählimpulse ZI1 zugeleitet, während dem ersten Eingang eines UND-Gatters U2 Zählimpulse ZI2 zugeführt werden, wenn sich der Lichtstrahl radial nach außen bewegt. Die miteinander verbundenen zweiten Eingänge der beiden UND-Gatter U1 und U2 sind mit dem Ausgang eines Inverters I1 verbunden. Der Ausgang des UND-Gatters U1 ist mit dem ersten Eingang zweier UND-Gatter U3 und U4 verbunden. Der Ausgang des UND-Gatters U2 ist mit dem ersten Eingang zweier UND-Gatter U5 und U6 verbunden. Der Ausgang eines Inverters I2, dessen Eingang mit dem zweiten Eingang der UND-Gatter U4 und U6 verbunden ist, ist mit dem zweiten Eingang der UND-Gatter U3 und U5 verbunden. Der Ausgang eines ODER-Gatters O1, dessen erster Eingang mit dem Ausgang des UND-Gatters U4 und dessen zweiter Eingang mit dem Ausgang des UND-Gatters U5 verbunden ist, ist mit dem Zähleingang V des Zählers Z2 verbunden. Der Ausgang eines ODER-Gatters O2, dessen erster Eingang mit dem Ausgang des UND-Gatters U3 und dessen zweiter Eingang mit dem Ausgang des UND-Gatters U6 verbunden ist, ist mit dem Zähleingang V des Zählers Z1 verbunden.

Weil durch eine logische Eins am Eingang des Inverters I1 alle UND-Gatter U1 bis U6 gesperrt werden, werden auch die Zähler gesperrt. Dagegen öffnet eine logische Null am Eingang des Inverters I1 die UND-Gatter U1 und U2 für die Zählimpulse. Eine logische Eins am Eingang des Inverters I2 und somit auch am zweiten Eingang der UND-Gatter U4 und U6 bewirkt, daß die dem ersten Eingang des UND-Gatters U1 zugeführten Zählimpulse zum Zähler Z2 geleitet werden, daß dagegen die dem ersten Eingang des UND-Gatters U2 zugeführten Zählimpulse dem Zähler Z1 zugeführt werden.

Bei einer logischen Null am Eingang des Inverters I2 werden die Anschlüsse für die Zählimpulse vertauscht. Jetzt gelangen die Zählimpulse, die am ersten Eingang des UND-Gatters U1 anliegen, zum Zähler Z1, während die Zählimpulse, die am ersten Eingang des UND-Gatters U2 liegen, zum Zähler Z2 laufen.

Wenn die gewünschte Sprungrichtung radial nach innen ist, liegt bei dem in Figur 7 gezeigten dritten Ausführungsbeispiel am Eingang des Inverters I2 eine logische Eins; dagegen bedeutet eine logische Null am Eingang des Inverters I2, daß die gewünschte Sprungrichtung radial nach außen führt.

Die Erfindung ist allgemein für Zählvorrichtungen zum Zählen von Markierungen geeignet. Es spielt keine Rolle, ob die Markierungen oder Datenspuren mechanisch oder berührungslos abgetastet werden. In Regelkreisen zum Positionieren einer Einheit, beispielsweise eines Abtasters, bei der die Einheit durch optisches Abtasten und Abzählen von Markierungen positioniert wird, kann die Erfindung z.B. in vorteilhafter Weise eingesetzt werden. Sie ist insbesondere für Spurregelkreise geeignet, wie sie z.B. in CD-Spielern, Videoplattenspielern, DRAW-Disc-Spielern oder magneto-optischen Aufnahme- und Wiedergabegeräten anzutreffen sind.

**Patentansprüche**

1. Verfahren zum Zählen von Markierungen, die von einem Abtaster abgetastet werden, **dadurch gekennzeichnet,** daß ein erster Zähler (Z1) jeweils einen Zählimpuls (ZI) erhält, wenn der Abtaster in der gewünschten Richtung von einer Markierung zur nächsten springt, daß ein zweiter Zähler (Z2) jeweils einen Zählimpuls (ZI) erhält, wenn der Abtaster in der unerwünschten Richtung von einer Markierung zur nächsten springt, daß zum Springen über m Markierungen der Zählerstand der ersten Zählers (Z1) auf einen ersten vorgebbaren Wert gesetzt wird, während der Zählerstand des zweiten Zählers (Z2) auf einen zweiten vorgebbaren Wert gesetzt wird, daß die Zählerstände der beiden Zähler (Z1, Z2) miteinander verglichen werden und daß bei Gleichheit der Zählerstände ein Signal (LS) zum Anhalten des Abtasters abgegeben wird.

2. Verfahren nach Anspruch 1, **dadurch gekennzeichnet,** daß zum Springen über m Markierungen der Zählerstand des ersten Zählers (Z1) auf 0 und der Zählerstand des zweiten Zählers (Z2) auf m gesetzt wird.

3. Verfahren nach Anspruch 1, **dadurch gekennzeichnet,** daß für die beiden Zähler (Z1, Z2) zwei n-Bit-Zähler vorgesehen sind, daß zum Springen über m Markierungen der zweite Zähler (Z2) auf den Rest gesetzt wird, der sich aus dem Quotienten m/n ergibt, und daß der erste Zähler (Z1) auf 0 gesetzt wird .

4. Verfahren nach Anspruch 3, **dadurch gekennzeichnet,** daß bei gleichem Zählerstand das höchstwertige Bit im ersten Zähler (Z1) auf 0, im zweiten Zähler (Z2) dagegen auf 1 gesetzt wird.

5. Verfahren nach Anspruch 1, 2, 3 oder 4, **dadurch gekennzeichnet,** daß je zwei gleichwertige Ausgänge der Zähler (Z1, Z2) mit den Eingängen je eines ÄQUIVALENZ-Gatters (E1, ..., En) verbunden sind und daß die Ausgänge der ÄQUIVALENZ-Gatter (E1, ..., En) mit den Eingängen eines NAND-Gatters (N) verbunden sind, an dessen Ausgang das Signal (LS) zum Anhalten des Abtasters abnehmbar ist.

6. Zählvorrichtung zur Durchführung des Verfahrens nach Anspruch 4 oder 5, **dadurch gekennzeichnet,** daß ein erster Zähler (Z1) jeweils einen Zählimpuls (ZI) erhält, wenn der Abtaster in der gewünschten Richtung von einer Markierung zur nächsten springt, daß ein zweiter Zähler (Z2) jeweils einen Zählimpuls (ZI) erhält, wenn der Abtaster in der unerwünschten Richtung von einer Markierung zur nächsten springt, daß zum Springen über m Markierungen der Zählerstand des ersten Zählers (Z1) auf einen ersten vorgebbaren Wert gesetzt wird, während der Zählerstand des zweiten Zählers (Z2) auf einen zweiten vorgebbaren Wert gesetzt wird, daß die Zählerstände der beiden Zähler (Z1, Z2) miteinander verglichen werden, daß bei Gleichheit der Zählerstände ein Signal (LS) zum Anhalten des Abtasters abgegeben wird, daß je zwei gleichwertige Ausgänge der Zähler (Z1, Z2) mit den Eingängen je eines ÄQUIVALENZ-Gatters (E1, ..., En) verbunden sind, daß die Ausgänge der ÄQUIVALENZ-Gatter (E1, ..., En) mit den Eingängen eines NAND-Gatters (N) verbunden sind, an dessen Ausgang das Signal (LS) zum Anhalten des Abtasters abnehmbar ist, daß der eine Ausgang eines steuerbaren Umschalters (US) mit dem Zähleingang (V) des ersten Zählers (Z1) und der andere Ausgang mit dem Zähleingang (V) des zweiten Zählers (Z2) verbunden ist, daß der Steuereingang des steuerbaren Umschalters (US) mit dem Ausgang einer Richtungslogik (RL) verbunden ist und daß dem Eingang des steuerbaren Umschalters (US) die Zählimpulse (ZI) zugeführt werden.

7. Zählvorrichtung zur Durchführung des Verfahrens nach Anspruch 4 oder 5, **dadurch gekennzeichnet,** daß ein erster Zähler (Z1) jeweils einen Zählimpuls (ZI) erhält, wenn der Abtaster in der gewünschten Richtung von einer Markierung zur nächsten springt, daß ein zweiter Zähler (Z2) jeweils einen Zählimpuls (ZI) erhält, wenn der Abtaster in der unerwünschten Richtung von einer Markierung zur nächsten springt, daß zum Springen über m Markierungen der Zählerstand des ersten Zählers (Z1) auf einen ersten vorgebbaren Wert gesetzt wird, während der Zählerstand des zweiten Zählers (Z2) auf einen zweiten vorgebbaren Wert gesetzt wird, daß die Zählerstände der beiden Zähler (Z1, Z2) miteinander verglichen werden, daß bei Gleichheit der Zählerstände ein Signal (LS) zum Anhalten des Abtasters abgegeben wird, daß je zwei gleichwertige Ausgänge der Zähler (Z1, Z2) mit den Eingängen je eines ÄQUIVALENZ-Gatters (E1, ..., En) verbunden sind, daß die Ausgänge der ÄQUIVALENZ-Gatter (E1, ..., En) mit den Eingängen eines NAND-Gatters (N) verbunden sind, daß der Zähleingang (V) des ersten Zählers (Z1) mit dem ersten Eingang eines ersten und eines zweiten NOR-Gatters (N1, N2) verbunden ist, daß der Zähleingang (V) des zweiten Zählers (Z2) mit dem zweiten Eingang des ersten und zweiten NOR-Gatters (N1, N2) verbunden ist, daß der Ausgang des ersten NOR-Gatters (N1) mit einem Eingang des NAND-Gatters (N) verbunden ist, dessen Ausgang mit dem Rücksetzeignang (R) eines RS-Flip-Flops (FF) verbunden ist, daß der Ausgang des zweiten NOR-Gatters (N2) mit dem Setzeingang (S) des RS-Flip-Flops (FF) verbunden ist, daß am Q-Ausgang des RS-Flip-Flops (FF), der mit dem Rücksetzeingang (G) des ersten Zählers (Z1) und mit dem Setzeingang (H) des zweiten Zählers (Z2) für das höchstwertige Bit verbunden ist, das Signal (LS) zum Anhalten des Abtasters abnehmbar ist, daß der eine Ausgang eines steuerbaren Umschalters (US) mit dem Zähleingang (V) des ersten Zählers (Z1) und der andere Ausgang mit dem Zähleingang (V) des zweiten Zählers (Z2) verbunden ist, daß der Steuereingang des steuerbaren Umschalters (US) mit dem Ausgang einer Richtungslogik (RL) verbunden ist und daß dem Eingang des steuerbaren Umschalters (US) die Zählimpulse (ZI) zugeführt werden.

8. Zählvorrichtung nach Anspruch 5, 6 oder 7, **dadurch gekennzeichnet,** daß dem ersten Eingang eines ersten UND-Gatters (U1) Zählimpulse (ZI1) und dem ersten Eingang eines zweiten UND-Gatters (U2) Zählimpulse (ZI2) zugeführt werden, daß die miteinander verbundenen zweiten Eingänge des ersten und zweiten UND-Gatters (U1, U2) mit dem Ausgang eines ersten Inverters (I1) verbunden sind, daß der Ausgang des ersten UND-Gatters (U1) mit dem ersten Eingang eines dritten und eines vierten UND-Gatters (U3, U4) verbunden ist, daß der Ausgang des zweiten UND-Gatters (U2) mit dem ersten Eingang eines fünften und eines sechsten UND-Gatters (U5, U6) verbunden ist, daß die miteinander verbundenen zweiten Eingänge des dritten und fünften UND-Gatters (U3, U5) mit dem Ausgang eines zweiten Inverters (I2) verbunden sind, dessen Eingang mit dem zweiten Eingang des vierten und des sechsten UND-Gatters (U4, U6) verbunden ist, daß der Ausgang des vierten UND-Gatters (U4) mit dem ersten Eingang eines ersten ODER-Gatters (O1) verbunden ist, dessen zweiter Eingang mit dem Ausgang des fünften UND-Gatters (U5) verbunden ist, daß der Ausgang des sechsten UND-Gatters (U6) mit dem ersten Eingang eines zweiten ODER-Gatters (O2) verbunden ist, dessen zweiter Eingang mit dem Ausgang des dritten UND-Gatters (U3) verbunden ist, daß der Ausgang des ersten ODER-Gatters (O1) mit dem Zähleingang (V) des zweiten Zählers (Z2) verbunden ist, daß der Ausgang des zweiten ODER-Gatters (O2) mit dem Zähleingang (V) des ersten Zählers (Z1) verbunden ist, daß ein digitales Signal am Eingang des zweiten Inverters (I2) bestimmt, welchem der beiden Zähler (Z1, Z2) die Zählimpulse (ZI1, ZI2) zugeführt werden und daß die Zählimpulse (ZI1, ZI2) in Abhängigkeit von der gewünschten und der tatsächlichen Bewegungsrichtung des Lichtstrahls entweder dem ersten oder dem zweiten Zähler (Z1, Z2) zugeführt werden.

## Claims

1.  Method for the counting of markings which are scanned by scanner, characterised in that, a first counter (Z1) receives a counting pulse (ZI) on each occasion that the scanner jumps from one marking to the next in the wanted direction, that a second counter (Z2) receives a counting pulse (ZI) on each occasion that the scanner jumps from one marking to the next in the unwanted direction, that the count of the first counter (Z1) is set to a first predetermined value for jumping over m markings while the count of the second counter (Z2) is set to a second predetermined value, that the counts of the two counters (Z1, Z2) are compared with each other and that, upon equality of the counts, a signal (LS) for stopping the scanner is emitted.

2.  Method in accordance with Claim 1, characterised in that, for jumping over m markings, the count of the first counter (Z1) is set to 0 and the count of the second counter (Z2) is set to m.

3.  Method in accordance with Claim 1, characterised in that, two n-bit counters are provided for the two counters (Z1, Z2), that, for jumping over m markings, the second counter (Z2) is set to the remainder which results from the quotient m/n, and that the first counter (Z1) is set to 0.

4.  Method in accordance with Claim 3, characterised in that, when there are equal counts, the most significant bit in the first counter (Z1) is set to 0 whereas in the second counter (Z2) it is set to 1.

5.  Method in accordance with Claim 1, 2, 3 or 4, characterised in that, each two equally significant outputs of the counters (Z1, Z2) are connected to the inputs of a respective EQUIVALENCE gate (E1, ..., En) and that the outputs of the EQUIVALENCE gates (E1, ..., En) are connected to the inputs of a NAND gate (N) from whose output the signal (LS) for stopping the scanner is derivable.

6.  Counting device for carrying out the method according to Claim 4 or 5, characterised in that, a first counter (Z1) receives a counting pulse (ZI) on each occasion that the scanner jumps from one marking to the next in the wanted direction, that a second counter (Z2) receives a counting pulse (ZI) on each occasion that the scanner jumps from one marking to the next in the unwanted direction, that the count of the first counter (Z1) is set to a first predetermined value for jumping over m markings while the count of the second counter (Z2) is set to a second predetermined value, that the counts of the two counters (Z1, Z2) are compared with each other, that upon equality of the counts, a signal (LS) for stopping the scanner is emitted, that each two equally significant outputs of the counters (Z1, Z2) are connected to the inputs of a respective EQUIVALENCE gate (E1, ..., En), that the outputs of the EQUIVALENCE gates (E1, ..., En) are connected to the inputs of a NAND gate (N) from whose output the signal (LS) for stopping the scanner is derivable, that the one output of a controllable switch (US) is connected to the counting input (V) of the first counter (Z1) and the other output is connected to the counting input (V) of the second counter (Z2), that the control input of the controllable switch (US) is connected to the output of a directional logic (RL) and that the counting pulses (ZI) are supplied to the input of the controllable switch (US).

7. Counting device for carrying out the method according to Claim 4 or 5, characterised in that, a first counter (Z1) receives a counting pulse (ZI) on each occasion that the scanner jumps from one marking to the next in the wanted direction, that a second counter (Z2) receives a counting pulse (ZI) on each occasion that the scanner jumps from one marking to the next in the unwanted direction, that the count of the first counter (Z1) is set to a first predetermined value for jumping over m markings while the count of the second counter (Z2) is set to a second predetermined value, that the counts of the two counters (Z1, Z2) are compared with each other, that upon equality of the counts, a signal (LS) for stopping the scanner is emitted, that each two equally significant outputs of the counters (Z1, Z2) are connected to the inputs of a respective EQUIVALENCE gate (E1, ..., En), that the outputs of the EQUIVALENCE gates (E1, ..., En) are connected to the inputs of a NAND gate (N), that the counting input (V) of the first counter (Z1) is connected to the first input of a first and of a second NOR gate (N1, N2), that the counting input (V) of the second counter (Z2) is connected to the second input of the first and second NOR gates (N1, N2), that the output of the first NOR gate (N1) is connected to an input of the NAND gate (N) whose output is connected to the resetting input (R) of an RS flip flop (FF), that the output of the second NOR gate (N2) is connected to the setting input (S) of the RS flip flop (FF), that the signal (LS) for stopping the scanner is derivable from the Q- output of the RS flip flop (FF) which is connected to the resetting input (G) of the first counter (Z1) and to the setting input (H) of the second counter (Z2) for the most significant bit, that the one output of a controllable switch (US) is connected to the counting input (V) of the first counter (Z1) and the other output is connected to the counting input (V) of the second counter (Z2), that the control input of the controllable switch (US) is connected to the output of a directional logic (RL) and that the counting pulses (ZI) are supplied to the input of the controllable switch (US).

8. Counting device according to Claim 5, 6 or 7, characterised in that, counting pulses (ZI1) are supplied to the first input of a first AND gate (U1) and counting pulses (ZI2) are supplied to the first input of a second AND gate (U2), that the second inputs of the first and second AND gates (U1, U2) which are connected to one another are connected to the output of a first inverter (I1), that the output of the first AND gate (U1) is connected to the first input of a third and a fourth AND gate (U3, U4), that the output of the second AND gate (U2) is connected to the first input of a fifth and a sixth AND gate (U5, U6), that the second inputs of the third and fifth AND gates (U3, U5) which are connected to one another are connected to the output of a second inverter (I2) whose input is connected to the second input of the fourth and the sixth AND gates (U4, U6), that the output of the fourth AND gate (U4) is connected to the first input of a first OR gate (O1) whose second input is connected to the output of the fifth AND gate (U5), that the output of the sixth AND gate (U6) is connected to the first input of a second OR gate (O2) whose second input is connected to the output of the third AND gate (U3), that the output of the first OR gate (O1) is connected to the counting input (V) of the second counter (Z2), that the output of the second OR gate (O2) is connected to the counting input (V) of the first counter (Z1), that a digital signal at the input of the second inverter (I2) determines as to which of the two counters (Z1, Z2) the counting pulses (ZI1, ZI2) are supplied and that the counting pulses (ZI1, ZI2) are supplied either to the first or to the second counter (Z1, Z2) in dependence on the wanted and the actual direction of movement of the light beam.

## Revendications

1. Procédé pour compter des repères qui sont balayés par un dispositif de balayage, **caractérisé en ce** qu'un premier compteur (Z1) reçoit respectivement une impulsion de comptage (ZI), à chaque fois que le dispositif de balayage saute dans le sens souhaité d'un repèreau prochain, qu'un second compteur (Z2) reçoit respectivement une impulsion de comptage (ZI) lorsque le dispositif de balayage saute dans le sens non souhaité d'un repère à l'autre, que pour sauter au-dessus de m repères le niveau du premier compteur (Z1) est mis sur une première valeur qui peut être prédéterminée, tandis que le niveau du second compteur (Z2) est mis sur une seconde valeur qui peut être prédéterminée, que les niveaux des deux compteurs (Z1, Z2) sont comparés l'un à l'autre et que, lorsque les niveaux des compteurs sont pareils, un signal (LS) est donné pour arrêter le dispositif de balayage.

2. Procédé selon la revendication, **caractérisé en ce** que, pour sauter au-dessus de m repères, le niveau du premier compteur (Z1) est mis à 0 et le niveau du second compteur (Z2) est mis à m.

3. Procédé selon la revendication 1, **caractérisé en ce** que pour les deux compteurs (Z1, Z2) deux compteurs à n bits sont prévus, que, pour sauter au-dessus de m repères, le second compteur (Z2) est mis sur le reste qui résulte du quotient m/n et que le premier compteur (Z1) est mis à 0.

4. Procédé selon la revendication 3, **caractérisé en ce** que, pour un niveau de compteur égal, le bit le plus fort est mis à 0 dans le premier compteur (Z1), dans le second compteur (Z2) par contre à 1.

5. Procédé selon la revendication 1, 2, 3 ou 4, **caractérisé en ce** que respectivement deux sorties équivalentes des compteurs (Z1, Z2) sont reliées aux entrées respectivement d'une porte d'EQUIVALENCE (E1, ..., En) et que les sorties des portes d'EQUIVALENCE (E1, ..., En) sont reliées aux entrées d'une porte NON-ET (N) à la sortie de laquelle le signal (LS) pour arrêter le dispositif de balayage peut être prélevé.

6. Dispositif de comptage pour exécuter le procédé selon la revendication 4 ou 5, **caractérisé en ce** qu'un premier compteur (Z1) reçoit respectivement une impulsion de comptage (ZI), à chaque fois que le dispositif de balayage saute dans le sens souhaité d'un repèreau prochain, qu'un second compteur (Z2) reçoit respectivement une impulsion de comptage (ZI) lorsque le dispositif de balayage saute dans le sens non souhaité d'un repère au prochain, que, pour sauter au-dessus de m repères, le niveau du premier compteur (Z1) est mis sur une première valeur qui peut être prédéterminée, tandis que le niveau du second compteur (Z2) est mis sur une seconde valeur qui peut être prédéterminée, que les niveaux des deux compteurs (Z1, Z2) sont comparés l'un à l'autre et que, lorsque les niveaux des compteurs sont pareils, un signal (LS) est donné pour arrêter le dispositif de balayage, que respectivement deux sorties équivalentes des compteurs (Z1, Z2) sont reliées aux entrées respectivement d'une porte d'EQUIVALENCE (E1, ..., En), que les sorties des portes d'EQUIVALENCE (E1, ..., En) sont reliées aux entrées d'une porte NON-ET (N) à la sortie de laquelle le signal (LS) pour arrêter le dispositif de balayage peut être prélevé, que l'une des sorties d'un commutateur qui peut être commandé (US) est reliée à l'entrée de comptage (V) du premier compteur (Z1) et que l'autre sortie est reliée à l'entrée de comptage (V) du second compteur (Z2), que l'entrée de commande du commutateur qui peut être commandé (US) est reliée à la sortie d'une logique de direction (RL) et que les impulsions de comptage (ZI) sont amenées à l'entrée du commutateur qui peut être commandé (US).

7. Dispositif de comptage pour exécuter le procédé selon la revendication 4 ou 5, **caractérisé en ce** qu'un premier compteur (Z1) reçoit respectivement une impulsion de comptage (ZI), lorsque le dispositif de balayage saute dans le sens souhaité d'un repère au prochain, qu'un second compteur (Z2) reçoit respectivement une impulsion de comptage (ZI) lorsque le dispositif de balayage saute dans le sens non souhaité d'un repère au prochain, que, pour sauter au-dessus de m repères, le niveau du premier compteur (Z1) est mis sur une première valeur qui peut être prédéterminée, tandis que le niveau du second compteur (Z2) est mis sur une seconde valeur qui peut être prédéterminée, que les niveaux des deux compteurs (Z1, Z2) sont comparés l'un à l'autre et que, lorsque les niveaux des compteurs sont pareils, un signal (LS) est donné pour arrêter le dispositif de balayage, que respectivement deux sorties équivalentes des compteurs (Z1, Z2) sont reliées aux entrées respectivement d'une porte d'EQUIVALENCE (E1, ..., En), que les sorties des portes d'EQUIVALENCE (E1, ..., En) sont reliées aux entrées d'une porte NON-ET (N), que l'entrée de comptage (V) du premier compteur (Z1) est reliée à la première entrée d'une première et d'une seconde porte NON-OU (N1, N2), que l'entrée de comptage (V) du second compteur (Z2) est reliée à la seconde entrée de la première et de la seconde porte NON-OU (N1, N2), que la sortie de la première porte NON-OU (N1) est reliée à l'entrée de la porte NON-ET (N), dont la sortie est reliée à l'entrée de remise à l'état initial (R) d'une bascule RS (FF), que la sortie de la seconde porte NON-OU (N2) est reliée à l'entrée de commande (S) de la bascule RS (FF), qu'à la sortie Q de la bascule RS (FF), qui est reliée à l'entrée de remise à l'état initial (G) du premier compteur (Z1) et à l'entrée de commande (H) du second compteur (Z2) pour le bit le plus fort, le signal (LS) pour arrêter le dispositif de balayage peut être prélevé, que l'une des sorties d'un commutateur qui peut être commandé (US) est reliée à l'entrée de comptage (V) du premier compteur (Z1) et l'autre sortie à l'entrée de comptage (V) du second compteur (Z2), que l'entrée de commande du commutateur qui peut être commandé (US) est reliée à la sortie d'une logique de direction (RL) et que les impulsions de comptage (ZI) sont amenées à l'entrée du commutateur qui peut être commandé (US).

8. Dispositif de comptage selon la revendication 5, 6 ou 7, **caractérisé en ce** que des impulsions de comptage (ZI1) sont amenées à la première entrée d'une première porte ET (U1) et des impulsions de comptage (ZI2) sont amenées à la première entrée d'une seconde porte ET (U2), que les secondes entrées reliées l'une à l'autre de la première porte ET et de la seconde porte ET (U1, U2) sont reliées à la sortie d'un premier inverseur (I1), que la sortie de la première porte ET (U1) est reliée à la première entrée d'une troisième et d'une quatrième porte ET (U3, U4), que la sortie de la seconde porte ET (U2) est reliée à la première entrée d'une cinquième et d'une sixième porte ET (U5, U6), que les secondes entrées reliées l'une à l'autre de la troisième et de la cinquième porte ET (U3, U5) sont reliées à la sortie d'un second inverseur (I2) dont l'entrée est reliée à la seconde entrée de la quatrième et de la sixième porte ET (U4, U6), que la sortie de la quatrième porte ET (U4) est reliée à la première entrée d'une première porte OU (01) dont la seconde entrée est reliée à la sortie de la cinquième porte ET (U5), que la sortie de la sixième porte ET (U6) est reliée à la première entrée d'une seconde porte OU (02) dont la seconde entrée est reliée à la sortie de la troisième porte ET (U3), que la sortie de la première porte OU (01) est reliée à l'entrée de comptage (V) du second compteur (Z2), que la sortie de la seconde porte OU (02) est reliée à l'entrée de comptage (V) du premier compteur (Z1), qu'un signal numérique à l'entrée du second inverseur (I2) détermine auquel des deux compteurs (Z1, U2) les impulsions de comptage (ZI1, ZI) sont amenées et que les impulsions de comptage (ZI1, ZI2) sont amenées en fonction du sens de déplacement souhaité et du sens de déplacement effectif du faisceau lumineux soit au premier, soit au second compteur (Z1, Z2).

Fig. 1

$$HF = AS + BS + CS + DS$$
$$FE = (AS + CS) - (BS + DS) = 0$$
$$TE = ES - FS = 0$$

Fig. 2

$$FE = (AS + CS) - (BS + DS) = 0$$
$$TE = ES - FS < 0$$

11

$$FE = (AS + CS) - (BS + DS) = 0$$

$$TE = ES - FS > 0$$

Fig. 3

Fig. 4

Fig. 5

Fig.6

Fig. 7

EP 0 494 905 B1